# EUROPÄISCHE PATENTSCHRIFT

(11) **EP 3 183 488 B1**
(45) Veröffentlichungstag und Bekanntmachung des Hinweises auf die Patenterteilung: **03.10.2018**
(21) Anmeldenummer: 15756869.2
(22) Anmeldetag: 18.08.2015
(51) Int. Cl.: F16L 55/163

(54) **DICHTUNGSINNENMANSCHETTE MIT HALTEELEMENT UND VERFAHREN ZUM AUFWEITEN EINER DICHTUNGSINNENMANSCHETTE**
INTERNAL SEALING SLEEVE WITH RETAINING ELEMENT AND METHOD FOR EXPANDING AN INTERNAL SEALING SLEEVE
MANCHON D'ÉTANCHÉITÉ INTÉRIEUR MUNI D'UN ÉLÉMENT DE RETENUE ET PROCÉDÉ POUR ÉVASER UN MANCHON D'ÉTANCHÉITÉ INTÉRIEUR

(30) Priorität: 20.08.2014 DE 102014111916
(43) Veröffentlichungstag der Anmeldung: 28.06.2017
(73) Patentinhaber: GRAF Patentverwertungs GbR, 78073 Bad Dürrheim (DE)
(72) Erfinder: GRAF, Jürgen, 78073 Bad Dürrheim (DE); GRAF, Joachim, 78073 Bad Dürrheim (DE)
(74) Vertreter: Westphal, Mussgnug & Partner Patentanwälte mbB
(86) Internationale Anmeldenummer: PCT/EP2015/068937
(87) Internationale Veröffentlichungsnummer: WO 2016/026851

(56) Entgegenhaltungen:
- DE-A1- 3 507 393
- DE-A1- 4 401 318
- DE-B3-102012 111 341
- DE-C1- 19 544 877
- DE-C1- 19 910 522
- DE-U1-202010 013 588
- US-A- 3 960 395

## Beschreibung

Die Erfindung betrifft eine Dichtungsinnenmanschette zum Einsetzen in Rohre, um dortige Leckstellen abzudichten, gemäß den Merkmalen des Oberbegriffs des Anspruchs 1, sowie ein Verfahren zum Aufweiten einer Dichtungsinnenmanschette.

Solche Dichtungsinnenmanschetten sind hinlänglich bekannt und beispielsweise in DE 44 01 318 C2 beschrieben. Mit Hilfe von solchen Dichtungsinnenmanschetten können Undichtigkeitsstellen von z. B. unterirdisch verlegten Rohren aus Beton oder einem anderen Werkstoff ohne Grabarbeiten repariert werden. Hierfür wird in das zu reparierende, undichte Rohr die Dichtungsmanschette bis zur Stelle der Undichtigkeit eingeschoben. Dabei ist zunächst die Dichtungsinnenmanschette spiralig zusammengebogen, so dass sie einen kleineren Durchmesser als das abzudichtende Rohr hat. Ist die Dichtungsmanschette bis zu der undichten Stelle des zu reparierenden Rohres verbracht, wird mittels einer mechanischen Montiereinrichtung die Dichtungsinnenmanschette so lange aufgeweitet, bis sie sich unter Zusammenpressen der Dichtungsringe sehr eng an die Rohrinnenwand angelegt haben. Mittels einer Arretierungsvorrichtung, die ein mit einer Zahnreihe kämmendes Spannritzel und einen in dessen Zähne eingreifenden, federnden Sperrriegel aufweist, wird die Dichtungsinnenmanschette in ihrer aufgeweiteten Stellung gehalten. Ähnliche Dichtungsinnenmanschetten sind aus DE 199 10 522 C1, US 3960395 A, DE 20 2010 013 588 U1 und DE 35 07 393 A1 bekannt.

Es ist üblich, das zusammengebogene Band mittels einem Klebeband festzustellen, um das Aufweiten der Dichtungsinnenmanschette vor dem gewünschten Moment zu vermeiden. Wenn die Aufweitevorrichtung anfängt, die Dichtungsinnenmanschette aufzuweiten, reißt das Klebeband ab, so dass die Dichtungsinnenmanschette zum weiteren Aufweiten freigegeben wird. Dann kann die Dichtungsmanschette weiter aufweiten, bis sie dicht an die Rohrinnenwand stößt.

Solche Klebebände weisen aber den Nachteil auf, dass diese bei Hitzegelegenheiten Elastisch werden und ggf. reißen, so dass sich die Dichtungsinnenmanschette vor der eigentlichen Montage, d.h. vor dem Einsetzen in das defekte Rohr, ungewollt aufweitet. Zudem sehen solche Klebebände auf den Dichtungsinnenmanschetten unschön aus.

Die vorliegende Erfindung hat deshalb das Ziel, eine bessere und sicherere Fixierung für die bekannten Dichtungsinnenmanschetten weiterzubilden, die u.a. gegen die Hitze nicht empfindlich ist und optisch nicht auffällt.

Diese Aufgabe wird durch eine Dichtungsmanschette mit den Merkmalen des Anspruchs 1 sowie ein Verfahren zum Aufweiten einer Dichtungsinnenmanschette mit den Merkmalen des Anspruchs 10 gelöst.

Weiterbildungen der Erfindung sind Gegenstand der Unteransprüche.

Die erfindungsgemäße Dichtungsinnenmanschette zum Einsetzen in Rohre, um dortige Leckstellen abzudichten, weist ein rohrförmiges, zusammengebogenes und aufweitbares Band auf, dessen endseitigen Bandteile sich in Umfangsrichtung mindestens teilweise in einem Überlappungsbereich überlappen, wobei jedes der endseitigen Bandteile mindestens eine Öffnung aufweist, wobei jede Öffnung eines der endseitigen Bandteile mit einer Öffnung des jeweils anderen Bandteils ein Paar von Öffnungen bildet, und wobei in jedem Paar von Öffnungen ein Halteelement angeordnet ist. Das Halteelement besteht erfindungsgemäß aus Kunststoff. Die Elastizität des Halteelements aus Kunststoff vereinfacht sein Einsetzen in den Öffnungen.

Das mindestens eine Halteelement hält die zwei endseitigen Bandteile zusammen und dient daher zur Fixierung der Dichtungsinnenmanschette. So wird ein ungewolltes, zu früheres Aufweiten der Dichtungsinnenmanschette vermieden.

Es ist besonders vorteilhaft, wenn für jedes Paar von Öffnungen die Öffnung eines der endseitigen Bandteile zumindest teilweise die Öffnung des jeweils anderen Bandteils überlappt. Damit ist eine Fixierung der Bandteile durch das Halteelement, das z. B. ein einfacher Haltestift sein kann, besonders einfach.

Das Halteelement kann einen zylinderförmigen Körper und einen flachen Kopf aufweisen. Solche Halteelemente sind einfach und günstig herzustellen und dienen zur einfachen Einsetzung in die Dichtungsinnenmanschette.

Zusätzlich kann der Körper des Halteelements einen größeren Durchmesser als die Öffnungen, in den das Halteelement sitzt, aufweisen. Damit kann das Halteelement aus den Öffnungen nicht einfach herausgenommen werden.

Gemäß einer bevorzugten Ausgestaltung ist das Halteelement in die Öffnungen eingepresst. Damit bleibt es fest in den Öffnungen, auch dann, wenn die Dichtungsinnenmanschette Temperaturschwankungen ausgesetzt ist.

Vorzugsweise sitzt der Kopf des Halteelements auf dem außenliegenden endseitigen Bandteil und der Körper des Halteelements greift mindestens in die Öffnung des innenliegenden endseitigen Bandteils ein. Der Kopf wirkt somit unauffällig auf dem außenliegenden endseitigen Bandteil. Außerdem werden die zwei endseitigen Bandteile durch den Körper des Halteelements, der durch die Öffnungen der zwei endseitigen Bänder durchläuft, wirksam zusammengehalten.

Es ist besonders günstig, wenn die Öffnungen jedes Paars von Öffnungen den gleichen Durchmesser aufweisen und sich ganz überlappen. Dies dient insbesondere einem einfachen Einsetzen des Halteelements in die Öffnungen.

Gemäß einer bevorzugten Ausgestaltung können die Öffnungen und die Halteelemente so angeordnet sind, dass die endseitigen Bandteile sich in Umfangsrichtung ganz überlappen. Damit bleibt die Dichtungsinnenmanschette rohrförmig, was das Bereitstellen der Dichtungsinnenmanschette in das Rohr vereinfacht. Vorzugsweise können die außenliegenden Öffnungen nicht nur besonders nah am Ende des außenliegenden endseitigen Bandteils angeordnet sein, sondern auch symmetrisch gegenüber der radialen Ebene, die durch die Mitte der axialen Länge der Dichtungsinnenmanschette läuft.

Zusätzlich kann die Dichtungsinnenmanschette eine Arretierungsvorrichtung aufweisen. Damit wird die Dichtungsinnenmanschette in ihrer aufgeweiteten Stellung gehalten. Solche Arretierungen sind z.B. aus DE 44 01 318 C2, DE 195 44 877 C1 oder DE 10 2012 111 341 B3 bekannt.

Das erfindungsgemäße Verfahren zum Aufweiten einer erfindungsgemäßen Dichtungsinnenmanschette umfasst die folgende Schritte in der nachfolgend angegebenen Reihenfolge: die Dichtungsinnenmanschette wird im zusammengebogenen Zustand bereitgestellt. Dann wird eine Aufweitevorrichtung in die Dichtungsinnenmanschette eingebracht. Die Dichtungsmanschette wird aufgeweitet, so dass das HalteelementHalteelement abbricht und die Dichtungsinnenmanschette zum weiteren Aufweiten freigegeben wird. Schließlich weitet sich die Dichtungsinnenmanschette weiter auf, bis ein Enddurchmesser der Dichtungsinnenmanschette erreicht wird.

Das bzw. die Halteelemente halten die endseitigen Bandteile zusammen. Nur mit der Aufweitevorrichtung können die Halteelemente abbrechen zum weiteren Aufweiten der Dichtungsinnenmanschette. Bei Hitzegelegenheiten z.B. brechen die Halteelemente nicht ab im Gegensatz zu üblichen Klebebändern. Damit kann der Moment des Aufweitens sicher gewählt werden. Die Halteelemente können so gefertigt und eingesetzt werden, dass sie abbrechen und nicht herausgeschleudert werden.

Vorzugsweise wird das Halteelement beim Aufweiten der Dichtungsinnenmanschette in zwei Teilen abgebrochen und die abgebrochenen Teile des Halteelements verbleiben vorzugsweise in den jeweiligen Öffnungen der Bandteile. Damit fallen keine Teile der Halteelemente in das Rohr, so dass das Verfahren sauber ist. Außerdem bleiben die Oberflächen der endseitigen Bandteile ununterbrochen.

Die erfindungsgemäße Dichtungsinnenmanschette wird anhand von mehreren Ausführungsbeispielen im Zusammenhang mit Figuren nachfolgend näher erläutert. Es zeigen:
- Figur 1: den perspektivischen Blick einer erfindungsgemäßen Dichtungsinnenmanschette von außen,
- Figur 2: einen Ausschnitt einer Schnittansicht der Dichtungsinnenmanschette von Figur 1 entlang der Linie A-A,
- Figur 3: einen Ausschnitt einer Schnittansicht einer erfindungsgemäßen Dichtungsinnenmanschette nach einer anderen Ausgestaltung, und
- Figur 4: eine Ansicht von oben auf verschiedene erfindungsgemäße Öffnungen.

In den nachfolgenden Figuren bezeichnen, sofern nicht anders angegeben, gleiche Bezugszeichen gleiche Teile mit gleicher Bedeutung.

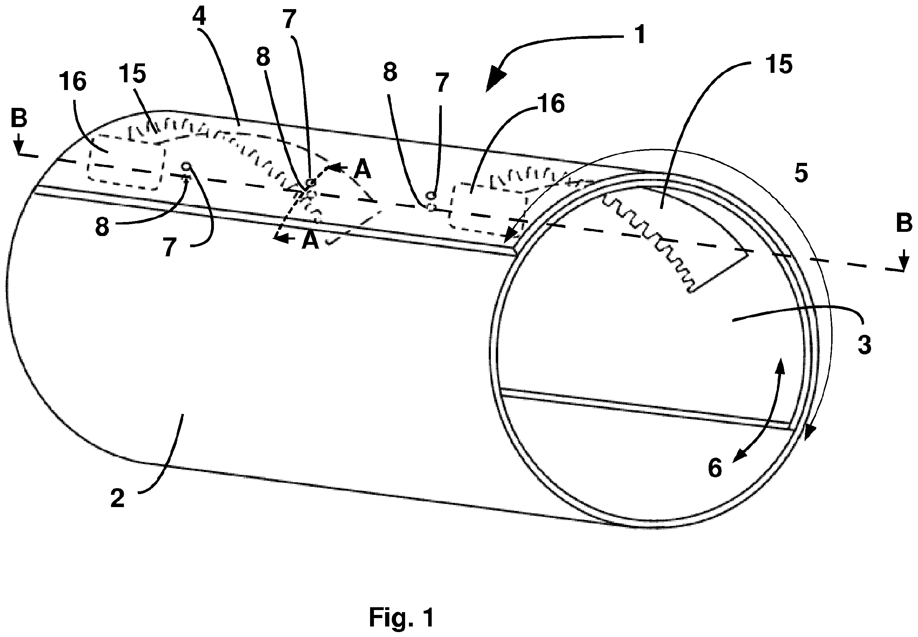

In Figur 1 ist in perspektivischer Darstellung eine erfindungsgemäße Dichtungsinnenmanschette 1 gezeigt. Der Betrachter blickt auf ein zusammengebogenes Band 2, das vorzugsweise aus Stahlblech oder dergleichen besteht. Das Band 2 weist in dem dargestellten, zusammengebogenen Zustand ein innenliegendes endseitiges Bandteil 3 und ein außenliegendes endseitiges Bandteil 4 auf, die sich in Umfangsrichtung 6 in einem Überlappungsbereich 5 überlappen.

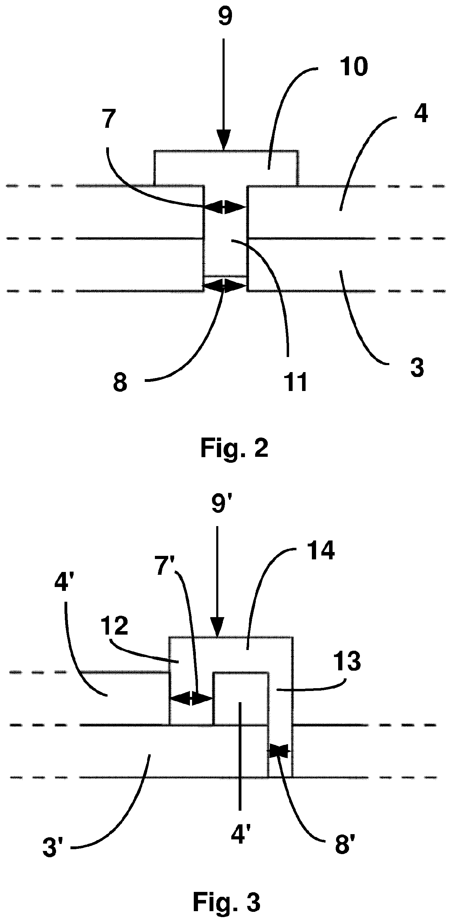

Das außenliegende endseitige Bandteil 4 weist mindestens eine, vorliegend drei Öffnungen 7 auf. Jeder Öffnung 7 des außenliegenden endseitigen Bandteils 4 liegt eine Öffnung 8 auf dem innenliegenden endseitigen Bandteil 8 gegenüber, so dass sich im zusammengebogenen Zustand der Dichtungsinnenmanschette 1 jeweils zwei Öffnungen 7, 8 zumindest teilweise überlappen, die ein Paar von Öffnungen 7, 8 bilden. In jedem Paar von Öffnungen 7, 8 ist ein Halteelement 9, z. B. ein Haltestift angeordnet. Dies zeigt die Figur 2. Das mindestens eine Halteelement 9 hält die Dichtungsinnenmanschette 1 in ihrem zusammengebogenen Zustand. So wird ein ungewolltes, zu früheres Aufweiten der Dichtungsinnenmanschette 1 vermieden.

Das Halteelement 9 besteht aus Kunststoff. Das elastische Halteelement 9 kann dann so einfach in die Öffnungen 7, 8 eingesetzt bzw. eingedrückt werden.
Die Öffnungen 7, 8 können symmetrisch gegenüber der radialen Ebene, die durch die Mitte der axialen Länge der Dichtungsinnenmanschette 1 durchläuft, angeordnet sein.
Damit das Band 2 in diesem zusammengerollten Zustand verbleibt und sich im Durchmesser nicht verkleinern kann, weist das innenliegende endseitige Bandteil 3 zusätzlich mindestens eine bzw. vorliegend zwei Arretierungsvorrichtungen 15. Für die Ausgestaltung der Arretierungsvorrichtung 15 wird auf die Druckschrift DE 10 2012 111 341 B3 verwiesen. Die Arretierungsvorrichtungen weisen einen Niederhalter 16 auf, der eine nicht dargestellte Sperre überdeckt. Die Arretierungsvorrichtungen 15 können symmetrisch gegenüber der radialen Ebene, die durch die Mitte der axialen Länge der Dichtungsinnenmanschette 1 durchläuft, angeordnet sein. Die Niederhalter 16 bzw. die Sperren können dann durch eine axiale Achse B-B durchgelaufen sein. Die Öffnungen 7, 8 können vorzugsweise auf der Achse B-B angeordnet sein.
Anders als im dargestellten Beispiel kann jede der Öffnungen 7 des außenliegenden endseitigen Bandteils 4 besonders nah am Ende des außenliegenden endseitigen Bandteils 4 angeordnet sein. Damit können sich die endseitigen Bandteile 3, 4 ganz überlappen, so dass die Dichtungsinnenmanschette 1 in dem zusammengebogenen Zustand rohrförmig verbleibt und daher einfach in das abzudichtende Rohr eingesetzt werden kann.

Eine nähere Darstellung der Öffnungen 7, 8 und deren Halteelement 9 zeigt die Figur 2. In Figur 2 ist eine Schnittansicht eines Ausschnitts der Dichtungsinnenmanschette 1 von Figur 1 immer im zusammengebogenen Zustand entlang der Linie A-A gezeigt.

In der dargestellten Ausgestaltung weisen die Öffnung 7 des außenliegenden endseitigen Bandteils 4 und die innenliegende Öffnung 8 des innenliegenden Bandteils 3 einen gleichen Durchmesser auf und überlappen sich ganz.

Das Halteelement 9 besteht aus einem zylindrischen Körper 11 und einem flachem Kopf 10. Diese Form ist einfach und günstig, herzustellen. Der Durchmesser des Körpers 11 ist etwas größer als der Durchmesser der Öffnungen 7, 8. Der Durchmesser des Kopfs 10 ist größer als der Durchmesser des Körpers 11, so dass das Halteelement 9 in die Öffnungen 7, 8 nicht durchrutschen kann. Das Halteelement 9 ist in die Öffnungen 7, 8 eingepresst. Mit diesem einfachen Verfahren bleibt das Halteelement 9 fest in den Öffnungen 7, 8 und kann nach dem Einpressen nicht herausgenommen werden. Der Kopf 10 sitzt auf dem außenliegenden endseitigen Bandteil 4 und wirkt somit unauffällig auf dem außenliegenden endseitigen Bandteil 4. Die Länge des Körpers 11 ist größer als die Dicke des außenliegenden endseitigen Bandteils 4, so dass der Körper 11 mindestens in die Öffnung 8 des innenliegenden endseitigen Bandteils 3 eingreift und die zwei endseitigen Bandteile 3, 4 wirksam zusammenhalten kann. Der Körper 11 kann zusätzlich nicht über das innenliegende endseitige Bandteil 3 überragen.

Insgesamt ist das Halteelement 9 fest in den Öffnungen 7, 8 eingepresst, so dass es eine sicherere Fixierung für die Dichtungsinnenmanschette 1 bietet, die gegen Temperaturschwankungen unempfindlich ist, und die Öffnungen 7, 8 sowie die Halteelemente 9 fallen optisch nicht auf.

Die Figur 3 zeigt eine alternative Anordnung des Haltelements 9' und der Öffnungen 7', 8'.

In dieser alternativen Ausgestaltung weisen die Öffnung 7' des außenliegenden endseitigen Bandteils 4' und die Öffnung 8' des innenliegenden Bandteils 3' verschiedene Durchmesser auf und überlappen sich nicht. Das außenliegende endseitige Bandteil 4' endet vor der Öffnung 8' des innenliegenden Bandteils 3', so dass der Zugang zu der Öffnung 8' in beiden Richtungen frei ist. In diesem Beispiel fluchtet sogar das Ende des außenliegenden endseitigen Bandteils 4' mit dem Rand der Öffnung 8'.

Das Halteelement 9' ist U-förmig und besteht aus zwei parallelen Schenkeln 12, 13 und einem Verbindungssteg 14, der die zwei Schenkel 12, 13 verbindet. Die Schenkel 12 und 13 greifen jeweils in eine der Öffnungen 8' und 9' ein. Die Länge des Schenkels 12 ist dabei kleiner als die Dicke des außenliegenden endseitigen Bandteils 4', während die Länge des Schenkels 13 größer als die Dicke des außenliegenden endseitigen Bandteils 4' ist. Der Verbindungssteg 14 sitzt auf dem außenliegenden endseitigen Bandteil 4'. In diesem Fall stößt der Schenkel 13 an das Ende des außenliegenden, endseitigen Bandteils 4'.

Wie in Figur 2 ist der Durchmesser der Schenkeln 12, 13 etwas größer als der jeweilige Durchmesser der Öffnungen 7', 8'. Das Halteelement 9' ist in die Öffnungen 7', 8' eingepresst, so dass es eine sichere Fixierung für die Dichtungsinnenmanschette 1 bietet.

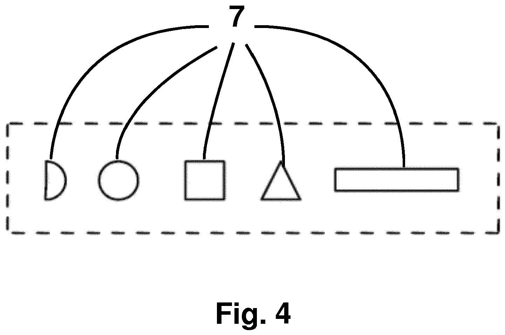

Figur 4 zeigt verschiedene erfindungsgemäße Öffnungen 7 des außenliegenden endseitigen Bandteils 4 in einer Ansicht von oben. Die Öffnungen 7 können verschiedene Konturen aufweisen. In diesem Fall kann die Öffnung 7 halbkreisförmig, kreisförmig, quadratisch, dreieckig oder rechteckig sein. Selbstverständlich können die Öffnungen 8 des innenliegenden endseitigen Bandteils 3 auch beliebige Konturen aufweisen, vorzugsweise dieselben Konturen wie die jeweiligen Öffnungen 7 des außenliegenden endseitigen Bandteils 4. Hier sind nur ein paar mögliche Konturen dargestellt. Andere Konturen sind aber selbstverständlich auch möglich.

Das Aufweiten der Innendichtungsmanschette geschieht wie folgt.

Die Dichtungsinnenmanschette 1 wird im zusammengebogenen Zustand bereitgestellt und in das abzudichtende Rohr (nicht dargestellt) gebracht, beispielweise anhand eines Montagewagens, bis zur abzudichtenden Stelle. Dann wird eine Aufweitevorrichtung in die Dichtungsinnenmanschette 1 eingebracht. Dies kann ein Luftkissen oder eine Betätigungsvorrichtung sein. Die Aufweitevorrichtung wird betätigt und die Dichtungsmanschette 1 wird aufgeweitet, so dass das Halteelement 9 abbricht. Nur mit der Aufweitevorrichtung kann das Halteelement 9 abbrechen zum weiteren Aufweiten der Dichtungsinnenmanschette 1. Damit kann der Moment des Aufweitens sicher gewählt werden. Das Halteelement 9 kann in zwei Teilen abbrechen, die fest in den jeweiligen Öffnungen 7, 8 der endseitigen Bandteilen 3, 4 bleiben und nicht herausgeschleudert werden. Damit fallen keine fremden Teile der Halteelemente 9 in das Rohr. Außerdem bleiben die endseitigen Bandteile 3, 4 ununterbrochen. Die Dichtungsinnenmanschette 1 wird dann zum weiteren Aufweiten durch die Aufweitevorrichtung freigegeben. Dies kann nur erfolgen nach dem Abbruch des Halteelements 9. Schließlich weitet sich die Dichtungsinnenmanschette 1 weiter auf, bis ein Enddurchmesser der Dichtungsinnenmanschette 1 erreicht wird und sie sich sehr eng an die Rohrinnenwand angelegt hat. Damit wird die Undichtigkeitsstelle repariert.

### Bezugszeichenliste

- 1: Dichtungsinnenmanschette
- 2: Band
- 3, 3': innenliegendes endseitiges Bandteil
- 4, 4': außenliegendes endseitiges Bandteil
- 5: Umfangsrichtung
- 6: Überlappungsbereich
- 7,7', 8, 8': Öffnungen
- 9, 9': Halteelement
- 10: Körper
- 11: Kopf
- 12, 13: Schenkel
- 14: Verbindungssteg
- 15: Arretierungsvorrichtung
- 16: Niederhalter

- A-A: Schnittlinie
- B-B: axiale Achse

## Patentansprüche

1. Dichtungsinnenmanschette (1) zum Einsetzen in Rohre, um dortige Leckstellen abzudichten, mit einem rohrförmigen, zusammengebogenen und aufweitbaren Band (2), dessen endseitigen Bandteile (3, 4) sich in Umfangsrichtung (6) mindestens teilweise in einem Überlappungsbereich (5) überlappen, wobei
- jedes der endseitigen Bandteile (3, 4) mindestens eine Öffnung (7, 8) aufweist,
- jede Öffnung (7) eines der endseitigen Bandteile (4) mit einer Öffnung (8) des jeweils anderen Bandteils (3) ein Paar von Öffnungen (7, 8) bildet,
- in jedem Paar von Öffnungen (7, 8) ein Halteelement (9) angeordnet ist,
**dadurch gekennzeichnet, dass** das Halteelement (9) aus Kunststoff besteht und so gefertigt und eingesetzt ist, dass es beim Aufweiten der Dichtungsinnenmanschette (1) abbricht.

2. Dichtungsinnenmanschette (1) nach Anspruch 1,
**dadurch gekennzeichnet, dass**
für jedes Paar von Öffnungen (7, 8) die Öffnung (7) eines der endseitigen Bandteile (4) zumindest teilweise die Öffnung (8) des jeweils anderen Bandteils (3) überlappt.

3. Dichtungsinnenmanschette (1) nach einem der Ansprüche 1 oder 2,
**dadurch gekennzeichnet, dass**
das Halteelement (9) einen zylinderförmigen Körper (11) und einen flachen Kopf (10) aufweist.

4. Dichtungsinnenmanschette (1) nach Anspruch 3, **dadurch gekennzeichnet, dass**
der Körper (11) des Halteelements (9) einen größeren Durchmesser als die Öffnungen (7, 8) aufweist, in den das Halteelement (9) sitzt.

5. Dichtungsinnenmanschette (1) nach Anspruch 4,
**dadurch gekennzeichnet, dass**
das Halteelement (9) in die Öffnungen (7, 8) eingepresst ist.

6. Dichtungsinnenmanschette (1) nach einem der Ansprüche 3 bis 5, **dadurch gekennzeichnet, dass**
der Kopf (10) des Halteelements (9) auf dem außenliegenden endseitigen Bandteil (4) sitzt und der Körper (11) des Halteelements (9) mindestens in die Öffnung (8) des innenliegenden endseitigen Bandteils (3) eingreift.

7. Dichtungsinnenmanschette (1) nach einem der vorherigen Ansprüche,
**dadurch gekennzeichnet, dass**
die Öffnungen (7, 8) jedes Paars von Öffnungen den gleichen Durchmesser aufweisen und sich ganz überlappen.

8. Dichtungsinnenmanschette (1) nach einem der vorherigen Ansprüche,
**dadurch gekennzeichnet, dass**
die Öffnungen (7, 8) und die Halteelemente (9) so angeordnet sind, dass die endseitigen Bandteile (3, 4) sich in Umfangsrichtung (6) ganz überlappen.

9. Dichtungsinnenmanschette (1) nach einem der vorherigen Ansprüche,
**dadurch gekennzeichnet, dass**
die Dichtungsinnenmanschette (1) eine Arretierungsvorrichtung (15) aufweist.

10. Verfahren zum Aufweiten einer Dichtungsmanschette (1) nach einem der vorherigen Ansprüche, wobei das Verfahren nacheinander folgende Schritte aufweist:
- Bereitstellen der Dichtungsinnenmanschette (1) im zusammengebogenen Zustand,
- Einbringen einer Aufweitevorrichtung in die Dichtungsinnenmanschette (1),
- Aufweiten der Dichtungsmanschette (1), so dass das Halteelement (9) abbricht und die Dichtungsinnenmanschette (1) zum weiteren Aufweiten freigegeben wird,
- weiteres Aufweiten der Dichtungsinnenmanschette (1) bis ein Enddurchmesser der Dichtungsinnenmanschette (1) erreicht wird.

11. Verfahren nach Anspruch 10,
**dadurch gekennzeichnet, dass**
das zumindest eine Halteelement (9) in zwei Teilen abgebrochen wird.

12. Verfahren nach Anspruch 10 oder 11,
**dadurch gekennzeichnet, dass**
die abgebrochenen Teile des Halteelements (9) fest in den jeweiligen Öffnungen (7, 8) der Bandteile (3, 4) verbleiben.

## Claims

1. Internal sealing sleeve (1) for insertion into tubes for the purposes of sealing leaks therein, having a tubular, bent-together and expandable strip (2), the end-side strip parts (3, 4) of which at least partially overlap in a circumferential direction (6) in an overlap region (5), wherein
- each of the end-side strip parts (3, 4) has at least one opening (7, 8),
- each opening (7) of one of the end-side strip parts (4) together with an opening (8) of the respective other strip part (3) forms a pair of openings (7, 8),
- a retaining element (9) is arranged in each pair of openings (7, 8),
**characterized in that** the retaining element (9) is composed of plastic and is manufactured and inserted such that it breaks away when the internal sealing sleeve (1) is expanded.

2. Internal sealing sleeve (1) according to Claim 1,
**characterized in that**
for each pair of openings (7, 8), the opening (7) of one of the end-side strip parts (4) at least partially overlaps the opening (8) of the respective other strip part (3).

3. Internal sealing sleeve (1) according to either of Claims 1 and 2,
**characterized in that**
the retaining element (9) has a cylindrical body (11) and a flat head (10).

4. Internal sealing sleeve (1) according to Claim 3,
**characterized in that**
the body (11) of the retaining element (9) has a greater diameter than the openings (7, 8) in which the retaining element (9) is seated.

5. Internal sealing sleeve (1) according to Claim 4,
**characterized in that**
the retaining element (9) is pressed into the openings (7, 8).

6. Internal sealing sleeve (1) according to one of Claims 3 to 5,
**characterized in that**
the head (10) of the retaining element (9) is seated on the outer end-side strip part (4), and the body (11) of the retaining element (9) engages at least into the opening (8) of the inner end-side strip part (3).

7. Internal sealing sleeve (1) according to one of the preceding claims,
**characterized in that**
the openings (7, 8) of each pair of openings have the same diameter and fully overlap.

8. Internal sealing sleeve (1) according to one of the preceding claims,
**characterized in that**
the openings (7, 8) and the retaining elements (9) are arranged such that the end-side strip parts (3, 4) fully overlap in the circumferential direction (6) .

9. Internal sealing sleeve (1) according to one of the preceding claims,
**characterized in that**
the internal sealing sleeve (1) has a locking device (15) .

10. Method for expanding a sealing sleeve (1) according to one of the preceding claims,
wherein the method has the following steps in succession:
- providing the internal sealing sleeve (1) in the bent-together state,
- inserting an expansion device into the internal sealing sleeve (1),
- expanding the sealing sleeve (1) such that the retaining element (9) breaks away and the internal sealing sleeve (1) is released for the further expansion,
- further expanding the internal sealing sleeve (1) until a final diameter of the internal sealing sleeve (1) is attained.

11. Method according to Claim 10,
**characterized in that**
the at least one retaining element (9) is broken away into two parts.

12. Method according to Claim 10 or 11,
**characterized in that** the broken-away parts of the retaining element (9) remain fixed in the respective openings (7, 8) of the strip parts (3, 4).

## Revendications

1. Manchon d'étanchéité interne (1) destiné à être mise en place dans des tubes pour assurer l'étanchéité d'emplacements de fuites, comprenant une bande (2) recourbée sur elle-même en forme de tube et susceptible d'être élargie dont les parties de bande d'extrémité (3, 4) se chevauchent au moins partiellement dans une zone de chevauchement (5) en direction périphérique (6), dans lequel :
- chacune des parties de bande d'extrémité (3, 4) comporte au moins une ouverture (7, 8),
- chaque ouverture (7) d'une partie de bande d'extrémité (4) forme, une paire d'ouvertures (7, 8), avec une ouverture (8) de l'autre partie de bande respective (3),
- dans chacune des paires d'ouvertures (7, 8) est monté un élément de retenue (9),
**caractérisé en ce que**
l'élément de retenue (9) est en matériau synthétique et est réalisé et mis en place de sorte qu'il se rompe lors de l'élargissement du manchon d'étanchéité interne (1).

2. Manchon d'étanchéité interne (1) conforme à la revendication 1,
**caractérisé en ce que**
pour chacune des paires d'ouvertures (7, 8), l'ouverture (7) d'une partie de bande d'extrémité (4) recouvre au moins partiellement l'ouverture (8) de l'autre partie de bande d'extrémité respective (3).

3. Manchon d'étanchéité interne (1) conforme à l'une des revendications 1 et 2,
**caractérisé en ce que**
l'élément de retenue (9) comporte un corps cylindrique (11) et une tête plate (10).

4. Manchon d'étanchéité interne (1) conforme à la revendication 3,
**caractérisé en ce que**
le corps (11) de l'élément de retenue (9) a un diamètre plus grand que les ouvertures (7, 8) dans lesquelles l'élément de retenue (9) est positionné.

5. Manchon d'étanchéité interne (1) conforme à la revendication 4,
**caractérisé en ce que**
l'élément de retenue (9) est introduit à force dans les ouvertures (7, 8).

6. Manchon d'étanchéité interne (1) conforme à l'une des revendications 3 à 5,
**caractérisé en ce que**
la tête (10) de l'élément de retenue (9) s'applique sur la partie de bande d'extrémité (4) externe et le corps (11) de l'élément de retenue (9) vient au moins en prise dans l'ouverture (8) de la partie de bande d'extrémité interne (3) .

7. Manchon d'étanchéité interne (1) conforme à l'une des revendications précédentes,
**caractérisé en ce que**
les ouvertures (7, 8) de chaque paire d'ouvertures ont le même diamètre et se chevauchent en totalité.

8. Manchon d'étanchéité interne (1) conforme à l'une des revendications précédentes,
**caractérisé en ce que**
les ouvertures (7, 8) et les éléments de retenue (9) sont montés de sorte que les parties de bande d'extrémité (3, 4) se chevauchent en totalité en direction périphérique (6).

9. Manchon d'étanchéité interne (1) conforme à l'une des revendications précédentes,
**caractérisé en ce qu'**il comporte un dispositif d'arrêt (15) .

10. Procédé permettant d'élargir un manchon d'étanchéité interne (1) conforme à l'une des revendications précédentes comprenant les étapes successives consistant à :
- positionner le manchon d'étanchéité interne (1) dans un état recourbé sur lui-même,
- insérer un dispositif d'élargissement dans le manchon d'étanchéité interne (1),
- élargir le manchon d'étanchéité (1) de sorte que l'élément de retenue (9) se rompe et que le manchon d'étanchéité interne (1) soit libéré pour permettre la poursuite de l'élargissement,
- poursuivre l'élargissement du manchon d'étanchéité interne (1) jusqu'à ce que son diamètre final ait été atteint.

11. Procédé conforme à la revendication 10,
**caractérisé en ce que**
l'élément de retenue (9) est rompu en deux parties.

12. Procédé conforme à la revendication 10 ou 11,
**caractérisé en ce que**
les parties rompues de l'élément de retenue (9) restent solidairement dans les ouvertures respectives (7, 8) des parties de bande (3, 4).
